Europäisches Patentamt

European Patent Office

Office européen des brevets

(11) Veröffentlichungsnummer : **0 168 011**
**B1**

(12) # EUROPÄISCHE PATENTSCHRIFT

(45) Veröffentlichungstag der Patentschrift :
**24.01.90**

(21) Anmeldenummer : **85108441.8**

(22) Anmeldetag : **08.07.85**

(51) Int. Cl.⁵ : **G 01 N 29/00**

(54) Elektrodynamischer Wandler.

(30) Priorität : 10.07.84 DE 3425386

(43) Veröffentlichungstag der Anmeldung :
**15.01.86 Patentblatt 86/03**

(45) Bekanntmachung des Hinweises auf die Patenterteilung : **24.01.90 Patentblatt 90/04**

(84) Benannte Vertragsstaaten :
**DE FR GB**

(56) Entgegenhaltungen :
DE--A-- 3 322 550
DE--C-- 3 414 071
US--A-- 4 398 425
US--A-- 4 480 477

(73) Patentinhaber : **Nukem GmbH**
**Rodenbacher Chaussee 6 Postfach 11 00 80**
**D-6450 Hanau 11 (DE)**

(72) Erfinder : **Hüschelrath, Gerhard, Dr.-Ing.**
**Beethovenstrasse 6**
**D-8752 Laufach-Frohnhofen (DE)**
Erfinder : **Kowol, Ewald**
**Jahnstrasse 24**
**D-6393 Wehrheim (DE)**

(74) Vertreter : **Stoffregen, Hans-Herbert, Dr. Dipl.-Phys. et al**
**Patentanwälte Strasse & Stoffregen Salzstrasse 11a**
**Postfach 2144**
**D-6450 Hanau/Main 1 (DE)**

## Beschreibung

Die Erfindung bezieht sich auf einen elektrodynamischen Wandler zur zerstörungsfreien Werkstoffprüfung mittels Ultraschall mit einem Elektromagneten, der einen von einer im Wandler stationär angeordneten Magnetwicklung umgebenen Kern aufweist, mit zumindest einem von dem Kern ausgehenden inneren Polschuh und einem diesem zugeordneten äußeren Polschuh, wobei auf einem einem zu überprürenden, elektrisch leitfähigen Werkstück zugewandten Endabschnitt des inneren Polschuhs Erreger- und Empfangsspulen angeordnet sind.

Um Bleche, Tankböden oder andere elektrisch leitfähige flächige Gegenstände überprüfen zu können, ist es wünschenswert, Prüfverfahren einzusetzen, bei denen die Anzahl der benötigten Prüfköpfe gering, also eine möglichst große Prüfspurbreite gegeben ist. Um diesen Anforderungen zu genügen, können Wirbelstromsender oder Ultraschallprüfköpfe mit Wasserankopplung benutz werden, wobei die Sonden oszillierend oder auf einer Scheibe rotierend angeordnet werden (Materialprüfung 16 (1974) Nr. 9 September, Seiten 281-282). Allerdings haben Wirbelstromsonden den Nachteil, daß nur oberflächennahe Fehler detektiert werden können. Mit den Wirbelstromsonden können dagegen keine Dimensionsmessungen durchgeführt werden. Ferner sind Wirbelstromsonden unempfindlich gegen die häufig auftretenden Dopplungsfehler. Bei der Verwendung von Piezoprüfköpfen ist eine Ankopplung über eine Wasserstrecke erforderlich, wodurch sich ein rotierendes System nur schwer und aufwendig realisieren läßt. Außerdem ist bei oszillierenden Systemen durch die Oszillationsfrequenz (1 bis 2 Hz) eine hohe Prüfgeschwindigkeit nicht oder nur mit großem Aufwand durch Vervielfachung der Kopfzahl möglich.

Benutzt man elektrodynamische Wandler der eingangs beschriebenen Art (wie sie zum Beispiel in der DE-OS 31 23 935 oder EP-A2-0045412 beschrieben sind), so kann zwar eine Fehler- und Dickenbestimmung erfolgen, wobei eine Ankopplung über eine Wasserstrecke nicht erforderlich ist. Bei diesen Wandlern ist der innere Polschuh stets rotationssymmetrisch zur Mittelachse des Kerns des Elektromagneten ausgebildet, wobei Erreger- und Empfangsspule auf dem freien Ende des inneren Polschuhs oder seitlich von diesem angeordnet sein können. Aufgrund des großen Gewichtes entsprechender Köpfe sind jedoch große Fliehkräfte bei der Rotation oder große Beschleunigungskräfte bei einer Oszillation notwendig.

Aufgabe der vorliegenden Erfindung ist es, einen elektrodynamischen Wandler der eingangs beschriebenen Art so auszubilden, daß eine große Spurbreite erzielt werden kann, ohne daß der gesamte Wandler rotieren oder oszillieren muß, so daß weder große Fliehkräfte, noch große Beschleunigungskräfte auftreten.

Die Aufgabe wird erfindungsgemäß dadurch gelöst, daß der Endabschnitt außermittig in Bezug auf die Mittelachse des Kerns angeordnet und mit dem Kern um dessen Mittelachse drehbar ausgebildet ist. Mit anderen Worten beschreibt der die Erreger- und Empfangsspule aufweisende Endabschnitt des inneren Polschuhs eine koaxial zur Kernachse des Elektromagneten verlaufende Kreisbahn. Durch den Abstand Mittelachse — Endabschnitt wird die Hälfte der gewünschten Spurbreite vorgegeben, so daß durch konstruktiv einfache Maßnahmen erreicht wird, eine große Spurbreite zu erzielen. Dabei erfolgt eine Abstützung zwischen dem Kern und dem von ihm ausgehenden inneren Polschuh über Kugellager, so daß eine reibungsfreie Bewegung möglich ist. Der Antrieb des inneren Kerns selbst kann über einen Riemenantrieb erfolgen.

Der dem inneren Polschuh zugeordnete äußere Polschuh kann nun entweder synchron mitrotieren oder in Bezug auf die Magnetwicklung stationär ausgebildet sein und sich entlang der Kreisbahn des Endabschnitts erstrecken. In Draufsicht ergibt sich folglich eine Ringgeometrie des äußeren Polschuhs.

Durch die erfindungsgemäße Lehre wird insbesondere der Vorteil erzielt, daß die Magnetwicklungen als relativ große Masse nicht mitrotieren muß. Dadurch sind Drehzahl von 200-300 rpm möglich. Ferner ist der benötigte Freiraum für die Rotation um den Radius der Magnetwicklung kleiner gegenüber der bislang üblichen Rotation des gesamten Prüfkopfes. Dadurch werden geringere Einbaumaßnahmen erforderlich. Bezüglich der verwendeten Piezoprüfköpfe ergibt sich der Vorteil, daß neben der wesentlich komplexeren Mechanik vor allem ein Kopplungsmedium nicht erforderlich ist.

In weiterer Ausgestaltung der Erfindung gehen von dem Kern zwei innere vorzugsweise diametral zueinander angeordnete Polschuhe aus, deren Endabschnitte — erfindungsgemäß — außermittig in Bezug auf die Mittelachse des Kerns angeordnet sind. Sofern nur ein innererer Polschuh vorhanden ist, kann diesem ein Ausgleichselement zugeordnet sein, um so einen Massenausgleich vorzunehmen.

Der innere Polschuh bzw. das Ausgleichselement umfassen nach einer weiteren Ausgestaltung der Erfindung einen von der äußeren Stirnfläche des Kerns ausgehenden und zu dessen Mittelachse abgewinkelten Zylinderabschnitt. Sofern es sich hierbei um den inneren Polschuh handelt, ist auf der äußeren Stirnfläche des Zylinderabschnitts der die Erreger- und Empfangsspule aufweisende als Polschuhkopf ausgebildete Endabschnitt lösbar angeordnet. Dies hat den Vorteil, daß bei einer Beschädigung der Erreger- und Empfangsspule ein problemloser Austausch des Polschuhkopfes, also des Endabschnitts erfolgen kann, ohne daß Änderungen an der Polschuhanordnung selbst erforderlich sind.

Die Erreger- und Empfangsspulen weisen eine sich in Richtung auf das zu überprüfende Werkstück erstreckende Schutzkappe auf, um Beschädigungen jener weitgehend zu vermeiden. Dabei kann die Schutzkappe aus Metall mit nitrierter Oberfläche bestehen und radial verlaufende Schlitze aufweisen. Alternativ kann die Schutzkappe eine Schicht aus synthetischem Stein wie Saphir aufweisen, die dem Werkstück zugewandt und auf diesem abgestützt wird.

Die Erfindung wird nachstehend an Hand eines in der Zeichnung dargestellten bevorzugten Ausführungsbeispiels näher erläutert.

Es zeigen :

Fig. 1 einen elektrodynamischen Wandler in Draufsicht und

Fig. 2 eine Schnittdarstellung des Wandlers entlang der Linie II-II.

In den Figuren ist ein elektrodynamischer Wandlerkopf 10 dargestellt, der einen Elektromagneten mit Kern 12 und diesen umgebender Magnetwicklung 14 umfaßt. Der Elektromagnet weist einen allgemein mit dem Bezugszeichen 16 versehenen inneren Polschuh sowie diesem zugeordnete, als Paar ausgebildete äußere Polschuhe 22 und 24 auf. Der innere Polschuh 16 geht von dem Kern 12 aus und umfaßt einen auch als Polschuhkopf bezeichneten Endabschnitt 18, auf dem nicht dargestellte Erreger- und Empfangsspulen angeordnet sind, die ihrerseits durch eine Kappe 20 gegen Beschädigungen geschützt ist. Dies ist erforderlich, da der Wandlerkopf 10 unmittelbar auf ein zu überprüfendes Werkstück in Form von zum Beispiel einem Blech, einem Tankboden oder einem anderen flächigen elektrisch leitfähigen Gegenstand abgesetzt wird. Die Schutzkappe 20 kann dabei aus Metall mit vorzugsweise nitrierter Oberfläche bestehen und radial verlaufende Schlitze aufweisen. Dies ist erforderlich, um eine Wirbelstromausbildung zu unterbinden. Alternativ dazu kann die Schutzkappe aber auch eine Schicht aus synthetischem Stein wie Saphir aufweisen, die unmittelbar auf das Werkstück abgesenkt wird.

Die dem rotationssymmetrisch ausgebildeten Polschuhkopf 18 zugewandten Stirnbereiche 26, 28 des dem inneren Polschuh 16 zugeordneten äußeren Polschuhpaars 22, 24 sind konkav geformt, weisen also in etwa eine Geometrie auf, wie sie der DE-A-31 23 935 zu entnehmen ist.

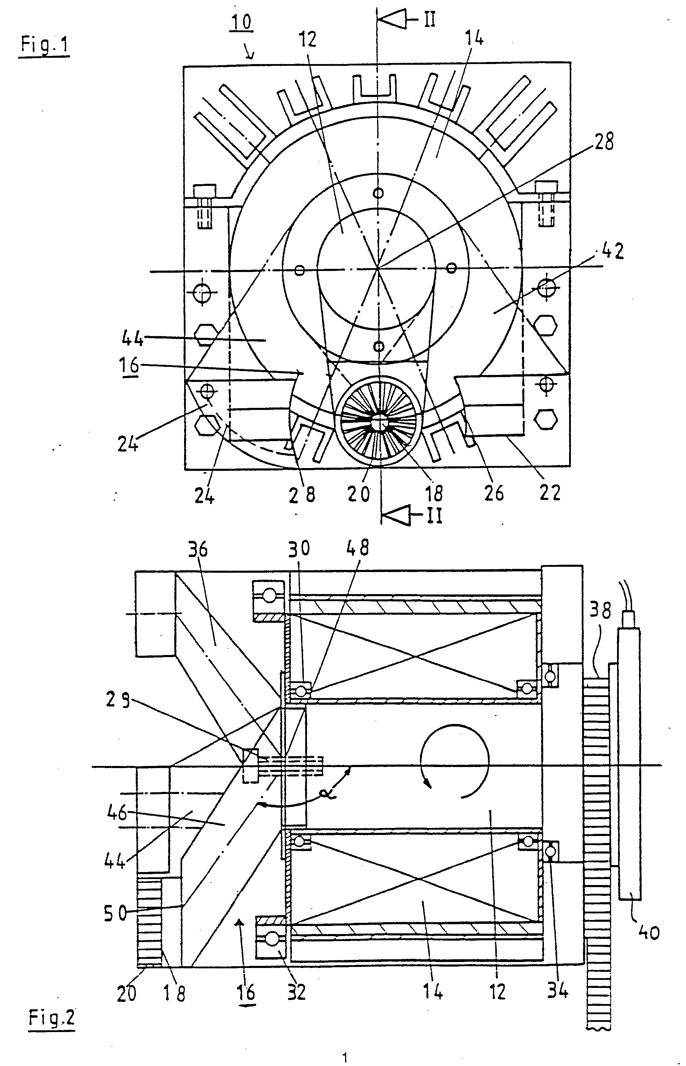

Wie durch die Fig. 1 und 2 verdeutlicht werden soll, befindet sich der Endabschnitt 18 des inneren Polschuhs 16 außermittig in Bezug auf die Mittelachse 29 des Kerns 12 des Elektromagneten. Ferner ist der Kern 12 mit dem inneren Polschuh 16 und dem äußeren Polschuhpaar 22, 24 über Kugellager 30, 32, 34 abgestützt, um ohne Bewegung der Magnetwicklung 14 eine Drehbewegung durchzuführen. Daraus ergibt sich der Vorteil, daß die Magnetwicklung 14 als relativ große Masse bei einer Rotation der inneren und äußeren Polschuhe 16, 22, 24 nicht mitdreht. Demzufolge sind auch keine großen Fliehkräfte notwendig. Würden nun die äußeren und der innere Polschuh 22, 24, 16 in eine Drehbewegung versetzt, so ergibt sich die Spurbreite des erfindungsgemäßen elektrodynamischen Wandlers durch den doppelten Abstand zwischen Mittelachse 29 und Polschuhkopf 18. Demzufolge kann eine gewünschte Spurbreite durch Vorgabe des Abstandes Mittelachse 29 des Kerns 12 und dem Polschuhkopf 18 vorgegeben werden.

Der Polschuhkopf 18 ist lösbar auf einem Zylinderabschnitt 46 des inneren Polschuhs 16 angeordnet und geht von der äußeren Stirnfläche 48 des Kerns 12 vorzugsweise ebenfalls lösbar aus. Die Hauptachse des Zylinderabschnitts 46 verläuft dabei unter einem Winkel mit $90° C < \alpha < 180°$ zu der Mittelachse 29. Auf der äußeren Stirnfläche 50 des Zylinderabschnitts 46 ist sodann der Polschuhkopf 18 lösbar befestigt.

Ist im Ausführungsbeispiel der äußere Polschuh 22, 24 synchron mitdrehend mit dem inneren Polschuh 16 ausgebildet, so kann alternativ dazu der äußere Polschuh als geschlossener in Draufsicht ringförmiger Körper ausgebildet sein, der sich entlang der Kreisbahn des inneren Polschuhs 16 erstreckt.

Wie die Schnittdarstellung gemäß Fig. 2 verdeutlicht, ist dem abgewinkelten Abschnitt 46 des inneren Polschuhs 16 ein Ausgleichselement 36 zugeordnet, um einen Massenausgleich zu erzielen. Gegebenenfalls kann an Stelle des Ausgleichselements 36 ein weiterer innerer Polschuh (2. Sondenkopf) angeordnet werden, dessen Aufbau dem des eingangs beschriebenen inneren Polschuhs 16 mit Polschuhkopf 18 und Abdeckung 20 (1. Sondenkopf) entspricht. In diesem Fall muß selbstverständlich dem weiteren inneren Polschuh ebenfalls ein äußeres Polschuhpaar zugeordnet werden, sofern dieses mit dem inneren Polschuh mitgedreht werden soll.

Die Rotation des inneren Polschuhs 16 mit Kern 12 und gegebenenfalls äußerem Polschuh 22, 24 kann über einen Flansch 38 erfolgen, der an der Rückseite des Elektromagneten mit dem Kern 12 verbunden ist und über zum Beispiel einen Zahnriemen in Drehbewegung versetzt wird. Die Signalübertragung zwischen der Erreger- und Empfangsspule erfolgt über schematisch dargestellte Schleifringe 40. Auch sei darauf hingewiesen, daß das äußere Polschuhpaar 22, 24 im Stirnbereich des Wandlerkopfs 10 gegenüber dem Kern 12 abgestützt sein kann. Dies kann über Verbindungselemente 42, 44 erfolgen, die aus nichtferritischem Material bestehen.

**Patentansprüche**

1. Elektrodynamischer Wandler zur zerstörungsfreien Werkstoffprüfung mittels Ultraschall mit einem Elektromagneten, der einen von einer im Wandler stationär angeordneten Magnetwicklung (14) umgebenen Kern aufweist, mit zumindest einem von dem Kern (12) ausgehenden inneren Polschuh (16) und einem diesem zugeordneten äußeren Polschuh (22, 24), wobei auf einem einem zu überprüfenden, elektrisch leitfähigen Werkstück zugewandten Endabschnitt (18) des inneren Polschuhs (16) Erreger- und Empfangsspulen angeordnet sind, dadurch gekennzeichnet, daß der Endabschnitt (18) außermittig in Bezug auf die Mittelachse (29) des Kerns (12) angeordnet und mit dem Kern (12) um dessen Mittelachse (29) drehbar ausgebildet ist.

2. Elektrodynamischer Wandler nach Anspruch 1, dadurch gekennzeichnet, daß der innere Polschuh (16) mit dem äußeren Polschuh (22, 24) zu der Magnetwicklung (14) synchron drehbar ausgebildet ist.

3. Elektrodynamischer Wandler nach Anspruch 1, dadurch gekennzeichnet, daß sich der äußere Polschuh (22, 24) entlang des Drehweges des inneren Polschuhs (16) erstreckt und in Bezug auf die Magnetwicklung (14) stationär angeordnet ist.

4. Elektrodynamischer Wandler nach Anspruch 1, dadurch gekennzeichnet, daß von dem Kern (12) zwei innere Polschuhe (16, 36) mit in Bezug auf die Mittelachse (29) des Kerns (12) außermittig angeordneten jeweils Erreger- und Empfangsspulen aufweisenden Endabschnitten (18) ausgehen.

5. Elektrodynamischer Wandler nach Anspruch 1, dadurch gekennzeichnet, daß der innere Polschuh (16) einen von dem Kern (12) ausgehenden und in Bezug auf dessen Mittelachse (29) abgewinkelten Abschnitt (46) aufweist, dessen freies Ende den Endabschnitt (18) bildet oder auf diesem angeordnet ist.

6. Elektrodynamischer Wandler nach Anspruch 1, dadurch gekennzeichnet, daß dem in Bezug auf die Mittelachse (29) des Kerns (12) außermittig verlaufenden Abschnitt (46) des inneren Polschuhs (16) zum Massenausgleich ein Ausgleichselement (36) zugeordnet ist.

7. Elektrodynamischer Wandler nach Anspruch 5 oder Anspruch 6, dadurch gekennzeichnet, daß der abgewinkelte Abschnitt (46) des inneren Polschuhs (16) und ein abgewinkelter Abschnitt eines zugeordneten weiteren inneren Polschuhs oder das Ausgleichselement (36) in Bezug auf die Mittelachse (29) des Kerns (12) diametral angeordnet sind.

8. Elektrodynamischer Wandler nach Anspruch 5, dadurch gekennzeichnet, daß der die Erreger- und Empfangsspulen aufweisende als Polschuhkopf ausgebildete Endabschnitt (18) lösbar auf der äußeren Stirnfläche (50) des von dem Kern (12) ausgehenden und zu dessen Mittelachse (29) abgewinkelten Abschnitts (46) angeordnet ist.

### Claims

1. Electrodynamic transducer for non-destructive material testing by ultra-sonic means with an electro-magnet having a core surrounded by a magnetic winding (14) in a fixed position in the transducer, and at least one internal pole shoe (16) extending from the core (12), and one corresponding external pole shoe (22, 24), the internal pole (16) · having excitation and receiver coils arranged on the end section (18) thereof facing the electrically conductive workpiece, which is to be tested, characterized in that, the end section (18) is arranged eccentrically in relation to the centre axis (29) of the core (12), and is designed to rotate with the core about the centre axis (29) thereof.

2. Electrodynamic transducer according to Claim 1, characterized in that, the internal pole shoe (16) is designed to rotate with the external pole shoes (22, 24) synchronously relative to the magnetic winding (14).

3. Electrodynamic transducer according to Claim 1, characterized in that, the external pole shoe (22, 24) extends along the rotational path of the internal pole shoe (16), and is statically positioned in relation to the magnetic winding (14).

4. Electrodynamic transducer according to Claim 1, characterized in that, two external pole shoes (16, 36) project from the core (12), each of these with excitation and receiver coils on end sections (18) arranged eccentrically in relation to the centre axis (29) of the core (12).

5. Electrodynamic transducer according to Claim 1, characterized in that, the internal pole shoe (16) has an angled section (46) projecting from the core (12) and angled in relation to the centre axis (29) thereof, and with its free end forming the end section (18), or is arranged on it.

6. Electrodynamic transducer according to Claim 1, characterized in that, relative to the centre axis (29) of the core (12) the eccentrically running section (46) of the internal pole shoe (16) is provided with a counter-balancing element (36) for mass balancing purposes.

7. Electrodynamic transducer according to Claim 5 or Claim 6, characterized in that, the angled section (46) of the internal pole shoe (16) and an angled section of an associated additional internal pole shoe, or the counter-balancing element (36) are arranged diametrically in relation to the centre axis (29) of the core (12).

8. Electrodynamic transducer according to Claim 5, characterized in that, the end section (18), in the form of a pole shoe head and carrying the excitation and receiver coils is arranged in detachable form on the outer face (50) of the section (46), which projects from the core (12), and is angled from the centre axis (29) thereof.

### Revendications

1. Transformateur électrodynamique pour contrôle non destructif de matériau par ultrasons avec un électro-aimant, qui présente un noyau entouré d'un bobinage magnétique (14) disposé de manière stationnaire dans le transformateur, avec au moins une pièce polaire interne (16) sortant du noyau (12) et avec une pièce polaire externe (22, 24) lui correspondant, une bobine excitatrice et une bobine réceptrice étant disposées sur une extrémité (18) tournée vers le matériau à contrôle électriquement conducteur, caractérisé en ce que l'extrémité (18) est excentrée par rapport à l'axe médian (29) du noyau (12) et qu'elle peut tourner avec le noyau (12) autour de son axe médian (29).

2. Transformateur électrodynamique selon la revendication 1, caractérisé en ce que la pièce polaire (16) interne peut tourner en synchronisme avec la pièce polaire externe (22, 24) par rapport au bobinage magnétique (14).

3. Transformateur électrodynamique selon la revendication 1, caractérisé en ce que la pièce polaire (22, 24) s'étend le long de la trajectoire de la pièce polaire interne (16) et est disposée de manière stationnaire par rapport au bobinage magnétique (14).

4. Transformateur électrodynamique selon la revendication 1, caractérisé en ce que deux pièces polaires (16, 36) partent du noyau (12) avec des extrémités (18) présentant chaque fois des bobines excitatrices et réceptrices disposées de manière excentrée par rapport à l'axe (29) du noyau (12).

5. Transformateur électrodynamique selon la revendication 1, caractérisé en ce que la pièce polaire interne (16) présente une pièce (46) oblique par rapport à l'axe médian (29) et sortant du noyau (12).

6. Transformateur électrodynamique selon la revendication 1, caractérisé en ce qu'un élément compensateur (36) est disposé pour l'équilibre massique de la pièce (46) sortant de manière oblique par rapport à l'axe médian (29) du noyau (12).

7. Transformateur électrodynamique selon la revendication 5 ou la revendication 6, caractérisé en ce que la pièce oblique (46) de la pièce polaire interne (16) et la pièce oblique d'une autre pièce polaire interne ou l'élément compensateur (36) sont diamétralement opposés par rapport à l'axe médian (29) du noyau (12).

8. Transformateur électrodynamique selon la revendication 5, caractérisé en ce que l'extrémité (18) exécutée en tête de pièce polaire portant les bobines excitatrice et réceptrice est démontable de la surface frontale externe (50) de la pièce (46) sortant du noyau (12) de manière oblique par rapport à son axe médian.

Fig.1

Fig.2